# EUROPEAN PATENT SPECIFICATION

(11) **EP 4 302 535 B1**
(45) Date of publication and mention of the grant of the patent: **14.01.2026**
(21) Application number: 22711310.7
(22) Date of filing: 03.03.2022
(51) Int. Cl.: H04W 64/00, H04W 24/10, G01S 5/00, G01S 5/02

(54) **POSITIONING MEASUREMENT REPORTING USING SMALL DATA TRANSMISSIONS**
POSITIONSMESSUNGSMELDUNG UNTER VERWENDUNG KLEINER DATENÜBERTRAGUNGEN
RAPPORT DE MESURE DE POSITIONNEMENT À L'AIDE DE PETITES TRANSMISSIONS DE DONNÉES

(30) Priority: 04.03.2021 US 202163156821 P
(43) Date of publication of application: 10.01.2024
(73) Proprietor: Lenovo (Singapore) Pte. Ltd., New Tech Park 556741 (SG)
(72) Inventor: THOMAS, Robin, 60489 Frankfurt am Main (DE); CHOI, Hyung-Nam, 85521 Ottobrunn (DE); LÖHR, Joachim, 65203 Wiesbaden (DE); BASU MALLICK, Prateek, 63303 Dreieich (DE); KUCHIBHOTLA, Ravi, Chicago, Illinois 60680 (US)
(74) Representative: Marks & Clerk LLP
(86) International application number: PCT/IB2022/051899
(87) International publication number: WO 2022/185256

(56) References cited:
- US-B1- 10 080 098
- INTERDIGITAL INC: "Discussion on Positioning in RRC Idle/Inactive mode", vol. RAN WG2, no. Electronic; 20210125 - 20210205, 15 January 2021 (2021-01-15), XP051973560, Retrieved from the Internet <URL:https://ftp.3gpp.org/tsg_ran/WG2_RL2/TSGR2_113-e/Docs/R2-2100374.zip R2-2100374 (R17 NR POS A81122).doc> [retrieved on 20210115]

## Description

### CROSS-REFERENCE TO RELATED APPLICATIONS

This application claims the benefit of United States Provisional Patent Application Number 63/156,821, entitled "POSITIONING MEASUREMENT REPORTING ENHANCEMENTS USING SDT TRANSMISSIONS" and filed on March 4, 2021, for Robin Thomas et al.

### FIELD

The subject matter disclosed herein relates generally to wireless communications and more particularly relates to positioning measurement reporting using small data transmissions.

### BACKGROUND

RAT-dependent positioning using new radio ("NR") technology is supported in Rel-16 of the third-generation partnership project ("3GPP") specifications. The positioning features include 5GC architectural and interface enhancements, as well as radio access node ("RAN") functionality that support NR physical layer and Layer-2/Layer-3 signaling procedures to enable RAT-dependent and RAT-independent positioning. INTERDIGITAL INC: "Discussion on Positioning in RRC Idle/ Inactive mode", 3GPP DRAFT; R2-2100374, 3RD GENERATION PARTNERSHIP PROJECT (3GPP), discloses NR positioning for UEs in RRC_INACTIVE state. US 10 080 098 B1 discloses initiating a periodic or triggered location session in a UE by a location server in a wireless network.

### BRIEF SUMMARY

Disclosed are procedures for positioning measurement reporting using small data transmissions. The procedures may be implemented by apparatus, systems, methods, or computer program products.

In one embodiment, a first apparatus includes a transceiver that receives, from a location server of a network, a positioning report segmentation configuration comprising a set of segmentation criteria for segmenting a positioning report for transmission to the network. In one embodiment, the first apparatus includes a processor that segments the positioning report according to the set of segmentation criteria. In one embodiment, the transceiver transmits the segmented positioning report to the network using a small data transmission ("SDT") uplink connection in a low power state.

In one embodiment, a first method receives, from a location server of a network, a positioning report segmentation configuration comprising a set of segmentation criteria for segmenting a positioning report for transmission to the network. In one embodiment, the first method segments the positioning report according to the set of segmentation criteria. In one embodiment, the first method transmits the segmented positioning report to the network using a small data transmission ("SDT") uplink connection in a low power state.

In one embodiment, the second apparatus includes a transceiver that receives, from a user equipment ("UE") device, capability information for performing positioning measurements corresponding to a positioning technique in a low power state. In one embodiment, the second apparatus includes a processor that determines a positioning report segmentation configuration comprising a set of segmentation criteria for segmenting a positioning report based on the capability information. In one embodiment, the transceiver transmits, to the UE device, the positioning report segmentation configuration. In one embodiment, the transceiver receives, from the UE device, the segmented positioning report using a small data transmission ("SDT") connection to the UE.

In one embodiment, the second method receives, from a user equipment ("UE") device, capability information for performing positioning measurements corresponding to a positioning technique in a low power state. In one embodiment, the second method determines a positioning report segmentation configuration comprising a set of segmentation criteria for segmenting a positioning report based on the capability information. In one embodiment, the second method transmits, to the UE device, the positioning report segmentation configuration. In one embodiment, the transceiver receives, from the UE device, the segmented positioning report using a small data transmission ("SDT") connection to the UE.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for positioning measurement reporting using small data transmissions;
Figure 2 is a block diagram illustrating one embodiment of a 5G New Radio ("NR") protocol stack;
Figure 3 is a diagram illustrating one embodiment of NR Beam-based positioning;
Figure 4A is one embodiment of DL-TDOA assistance data;
Figure 4B is one embodiment of DL-TDOA measurement report;
Figure 5 depicts one embodiment of Positioning report Segmentation Indication in RRC_INACTIVE state;
Figure 6 is a block diagram illustrating one embodiment of a user equipment apparatus that may be used for positioning measurement reporting using small data transmissions;
Figure 7 is a block diagram illustrating one embodiment of a network equipment apparatus that may be used for positioning measurement reporting using small data transmissions;
Figure 8 is a block diagram illustrating one embodiment of a first method for positioning measurement reporting using small data transmissions; and
Figure 9 is a block diagram illustrating one embodiment of a second method for positioning measurement reporting using small data transmissions.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The flowchart diagrams and/or block diagrams in the Figures illustrate the architecture, functionality, and operation of possible implementations of apparatuses, systems, methods, and program products according to various embodiments. **In** this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

Generally, the present disclosure describes systems, methods, and apparatuses for positioning measurement reporting using small data transmissions. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions.

RAT-dependent positioning using NR technology is supported in Rel-16 of the 3GPP specifications. The positioning features include 5GC architectural and interface enhancements, as well as radio access node ("RAN") functionality that support NR physical layer and Layer-2/Layer-3 signaling procedures to enable RAT-dependent and RAT-independent positioning. The present disclosure includes NR positioning solutions and enhancements for position measurement reporting, which addresses the following problem:
i. In the case of Rel-16 and previous releases of positioning (apart from Rel-14 NB-IOT positioning), an LTE Protocol Positioning ("LPP") session can only be initiated while the UE is in RRC_CONNECTED state, implying that the position estimates or measurements of a UE can only be obtained once a UE has already established an RRC connection with the base station (e.g., gNB or eNB).
ii. During the NR Positioning enhancements study phase, it was agreed that the small data transmission ("SDT") mechanism can be further studied to enable the UE to transmit uplink positioning measurement during RRC_INACTIVE state.
iii. A key issue is the size limitation of the SDT UL transmission (which is intended for small, infrequent user data transmissions) in relation to the size of the existing positioning measurement reports transmitted in RRC_CONNECTED state and therefore procedures need to be defined based on this constraint.

In one embodiment, the present disclosure aims to provide solutions related to the positioning procedures required to support the reporting of positioning measurements during a low UE power consumption state such as RRC_INACTIVE state.

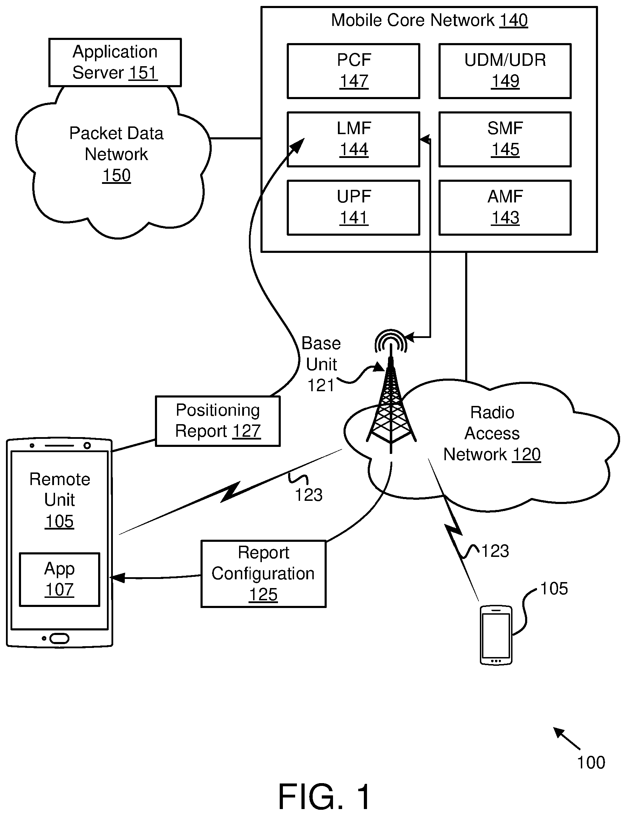

Figure 1 depicts a wireless communication system 100 for positioning measurement reporting using small data transmissions, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the 5G system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi^{®} or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Here, the RAN 120 is an intermediate network that provides the remote units 105 with access to the mobile core network 140. As described in greater detail below, the base unit(s) 121 may provide a cell operating using a first frequency range and/or a cell operating using a second frequency range.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

To establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, e.g., a tunnel between the remote unit 105 and a Packet Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121. Note that during NR operation on unlicensed spectrum (referred to as "NR-U"), the base unit 121 and the remote unit 105 communicate over unlicensed (e.g., shared) radio spectrum.

In one embodiment, the mobile core network 140 is a 5GC or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Location Management Function ("LMF") 144, a Unified Data Management function ("UDM"") and a User Data Repository ("UDR"). Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network (DN), in the 5G architecture. The AMF 143 is responsible for termination ofNAS signaling, NAS ciphering & integrity protection, registration management, connection management, mobility management, access authentication and authorization, security context management. The SMF 145 is responsible for session management (e.g., session establishment, modification, release), remote unit (e.g., UE) IP address allocation & management, DL data notification, and traffic steering configuration of the UPF 141 for proper traffic routing.

The LMF 144 receives positioning measurements or estimates from RAN 120 and the remote unit 105 (e.g., via the AMF 143) and computes the position of the remote unit 105. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like. In some embodiments, the UDM is co-located with the UDR, depicted as combined entity "UDM/UDR" 149.

In various embodiments, the mobile core network 140 may also include a Policy Control Function ("PCF") (which provides policy rules to CP functions), a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

As discussed in greater detail below, the remote unit 105 may receive a positioning report configuration 125 from a base unit 121, a location server, e.g., LMF 144, and/or the like, for segmenting a positioning report for SDT transmissions. The remote unit 105 may segment the positioning report according to the received positioning report configuration 125 and transmit the segmented report to the network, e.g., LMF 144, using SDT.

While Figure 1 depicts components of a 5G RAN and a 5G core network, the described embodiments for positioning measurement reporting using small data transmissions apply to other types of communication networks and RATs, including IEEE 802.11 variants, Global System for Mobile Communications ("GSM", e.g., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "RAN node" is used for the base station but it is replaceable by any other radio access node, e.g., gNB, ng-eNB, eNB, Base Station ("BS"), Access Point ("AP"), etc. Further, the operations are described mainly in the context of 5G NR. However, the proposed solutions/methods are also equally applicable to other mobile communication systems supporting positioning measurement reporting using small data transmissions.

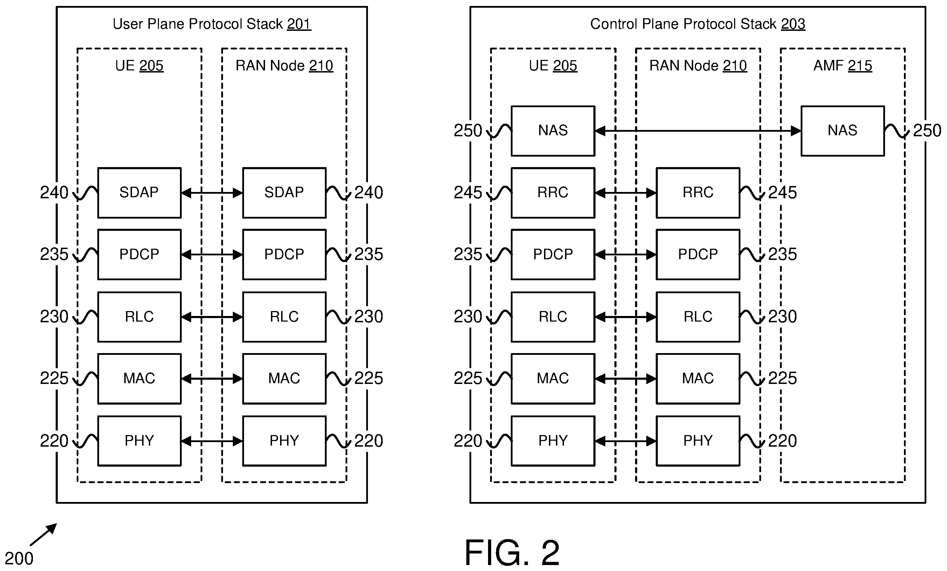

Figure 2 depicts a NR protocol stack 200, according to embodiments of the disclosure. While Figure 2 shows the UE 205, the RAN node 210 and an AMF 215 in a 5G core network ("5GC"), these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 220, a Medium Access Control ("MAC") sublayer 225, the Radio Link Control ("RLC") sublayer 230, a Packet Data Convergence Protocol ("PDCP") sublayer 235, and Service Data Adaptation Protocol ("SDAP") layer 240. The Control Plane protocol stack 203 includes a physical layer 220, a MAC sublayer 225, a RLC sublayer 230, and a PDCP sublayer 235. The Control Plane protocol stack 203 also includes a Radio Resource Control ("RRC") layer 245 and a Non-Access Stratum ("NAS") layer 250.

The AS layer (also referred to as "AS protocol stack") for the User Plane protocol stack 201 consists of at least SDAP, PDCP, RLC and MAC sublayers, and the physical layer. The AS layer for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 245 and the NAS layer 250 for the control plane and includes, e.g., an Internet Protocol ("IP") layer and/or PDU Layer (not depicted) for the user plane. L1 and L2 are referred to as "lower layers," while L3 and above (e.g., transport layer, application layer) are referred to as "higher layers" or "upper layers."

The physical layer 220 offers transport channels to the MAC sublayer 225. The physical layer 220 may perform a Clear Channel Assessment and/or Listen-Before-Talk ("CCA/LBT") procedure using energy detection thresholds, as described herein. In certain embodiments, the physical layer 220 may send a notification of UL Listen-Before-Talk ("LBT") failure to a MAC entity at the MAC sublayer 225. The MAC sublayer 225 offers logical channels to the RLC sublayer 230. The RLC sublayer 230 offers RLC channels to the PDCP sublayer 235. The PDCP sublayer 235 offers radio bearers to the SDAP sublayer 240 and/or RRC layer 245. The SDAP sublayer 240 offers QoS flows to the core network (e.g., 5GC). The RRC layer 245 provides for the addition, modification, and release of Carrier Aggregation and/or Dual Connectivity. The RRC layer 245 also manages the establishment, configuration, maintenance, and release of Signaling Radio Bearers ("SRBs") and Data Radio Bearers ("DRBs").

The NAS layer 250 is between the UE 205 and the 5GC 215. NAS messages are passed transparently through the RAN. The NAS layer 250 is used to manage the establishment of communication sessions and for maintaining continuous communications with the UE 205 as it moves between different cells of the RAN. In contrast, the AS layer is between the UE 205 and the RAN (e.g., RAN node 210) and carries information over the wireless portion of the network.

As background, for Release 17 ("Rel-17") of the 3GPP specification, the different positioning requirements are especially stringent with respect to accuracy, latency, and reliability. Table 1 shows positioning performance requirements for different scenarios in an Industrial IoT ("IIoT") or indoor factory setting.

**Table 1: IIoT Positioning Performance Requirements**

| Scenario | Horizontal accuracy | Vertical accuracy | Availability | Latency for position estimation of UE | UE Speed | Corresponding Positioning Service Level |
|---|---|---|---|---|---|---|
| Mobile control panels with safety functions (non-danger zones) | < 5 m | < 3 m | 90 % | < 5 s | N/A | Service Level 2 |
| Process automation - plant asset management | < 1 m | < 3 m | 90 % | <2s | < 30 km/h | Service Level 3 |
| Flexible, modular assembly area in smart factories (for tracking of tools at the work-place location) | < 1 m (relative positionin g) | N/A | 99 % | 1 s | < 30 km/h | Service Level 3 |
| Augmented reality in smart factories | < 1 m | < 3 m | 99 % | < 15 ms | < 10 km/h | Service Level 4 |
| Mobile control panels with safety functions in smart factories (within factory danger zones) | < 1 m | < 3 m | 99.9 % | < 1 s | N/A | Service Level 4 |
| Flexible, modular assembly area in smart factories (for autonomous vehicles, only for monitoring proposes) | < 50 cm | < 3 m | 99 % | 1 s | < 30 km/h | Service Level 5 |
| Inbound logistics for manufacturing (for driving trajectories (if supported by further sensors like camera, GNSS, IMU) of indoor autonomous driving systems)) | < 30 cm (if supported by further sensors like camera, GNSS, IMU) | < 3 m | 99.9 % | 10 ms | < 30 km/h | Service Level 6 |
| Inbound logistics for manufacturing (for storage of goods) | < 20 cm | < 20 cm | 99 % | < 1 s | < 30 km/h | Service Level 7 |

Some UE positioning techniques supported in Rel-16 are listed in Table 2. The separate positioning techniques as indicated in Table 2 may be currently configured and performed based on the requirements of the LMF and/or UE capabilities. Note that Table 2 includes TBS positioning based on PRS signals, but only observed time difference of arrival ("OTDOA") based on LTE signals is supported. The E-CID includes Cell-ID for NR method. The Terrestrial Beacon System ("TBS") method refers to TBS positioning based on Metropolitan Beacon System ("MBS") signals.

**Table 2: Supported Rel-16 UE positioning methods**

| Method | UE-based | UE-assisted, LMF-based | NG-RAN node assisted | Secure User Plane Location ("SUPL") |
|---|---|---|---|---|
| A-GNSS | Yes | Yes | No | Yes (UE-based and UE-assisted) |
| OTDOA | No | Yes | No | Yes (UE-assisted) |
| E-CID | No | Yes | Yes | Yes for E-UTRA (UE-assisted) |
| Sensor | Yes | Yes | No | No |
| WLAN | Yes | Yes | No | Yes |
| Bluetooth | No | Yes | No | No |
| TBS | Yes | Yes | No | Yes (MBS) |
| DL-TDOA | Yes | Yes | No | No |
| DL-AoD | Yes | Yes | No | No |
| Multi-RTT | No | Yes | Yes | No |
| NR E-CID | No | Yes | FFS | No |
| UL-TDOA | No | No | Yes | No |
| UL-AoA | No | No | Yes | No |

The transmission of PRS enable the UE to perform UE positioning-related measurements to enable the computation of a UE's location estimate and are configured per Transmission Reception Point ("TRP"), where a TRP may transmit one or more beams.

In one embodiment, the following RAT-dependent positioning techniques may be supported by the system 100:

DL-TDoA: The downlink time difference of arrival ("DL-TDOA") positioning method makes use of the DL RS Time Difference ("RSTD") (and optionally DL PRS RS Received Power ("RSRP") of DL PRS RS Received Quality ("RSRQ")) of downlink signals received from multiple TPs, at the UE (e.g., remote unit 105). The UE measures the DL RSTD (and optionally DL PRS RSRP) of the received signals using assistance data received from the positioning server, and the resulting measurements are used along with other configuration information to locate the UE in relation to the neighboring Transmission Points ("TPs").

DL-AoD: The DL Angle of Departure ("AoD") positioning method makes use of the measured DL PRS RSRP of downlink signals received from multiple TPs, at the UE. The UE measures the DL PRS RSRP of the received signals using assistance data received from the positioning server, and the resulting measurements are used along with other configuration information to locate the UE in relation to the neighboring TPs.

Multi-RTT: The Multiple-Round Trip Time ("Multi-RTT") positioning method makes use of the UE Receive-Transmit ("Rx-Tx") measurements and DL PRS RSRP of downlink signals received from multiple TRPs, measured by the UE and the gNB Rx-Tx measurements (e.g., measured by RAN node) and UL SRS-RSRP at multiple TRPs of uplink signals transmitted from UE.

The UE measures the UE Rx-Tx measurements (and optionally DL PRS RSRP of the received signals) using assistance data received from the positioning server, and the TRPs measure the gNB Rx-Tx measurements (and optionally UL SRS-RSRP of the received signals) using assistance data received from the positioning server. The measurements are used to determine the Round Trip Time ("RTT") at the positioning server which are used to estimate the location of the UE. In one embodiment, Multi-RTT is only supported for UE-assisted/NG-RAN assisted positioning techniques, as noted in Table 2.

E-CID/ NR E-CID: Enhanced Cell ID ("CID") positioning method, the position of a UE is estimated with the knowledge of its serving ng-eNB, gNB and cell and is based on LTE signals. The information about the serving ng-eNB, gNB and cell may be obtained by paging, registration, or other methods. NR Enhanced Cell ID ("NR E-CID") positioning refers to techniques which use additional UE measurements and/or NR radio resource and other measurements to improve the UE location estimate using NR signals.

Although NR E-CID positioning may utilize some of the same measurements as the measurement control system in the RRC protocol, the UE generally is not expected to make additional measurements for the sole purpose of positioning; e.g., the positioning procedures do not supply a measurement configuration or measurement control message, and the UE reports the measurements that it has available rather than being required to take additional measurement actions.

UL-TDoA: The UL TDOA positioning method makes use of the UL TDOA (and optionally UL SRS-RSRP) at multiple reception points ("RPs") of uplink signals transmitted from the UE. The RPs measure the UL TDOA (and optionally UL SRS-RSRP) of the received signals using assistance data received from the positioning server, and the resulting measurements are used along with other configuration information to estimate the location of the UE.

UL-AoA: The UL Angle of Arrival ("AoA") positioning method makes use of the measured azimuth and the zenith angles of arrival at multiple RPs of uplink signals transmitted from the UE. The RPs measure A-AoA and Z-AoA of the received signals using assistance data received from the positioning server, and the resulting measurements are used along with other configuration information to estimate the location of the UE.

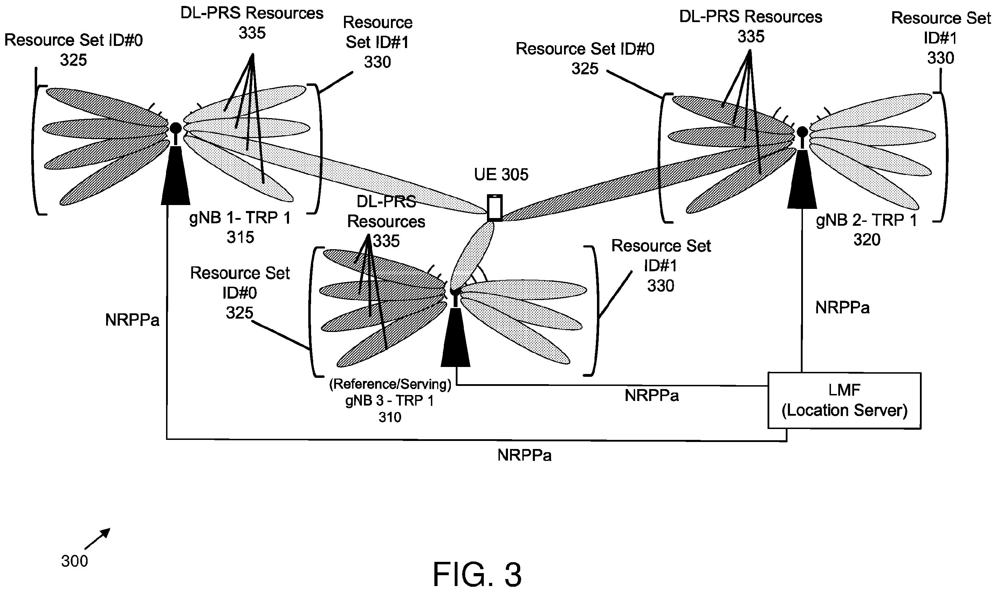

Figure 3 depicts a system 300 for NR beam-based positioning. According to Rel-16, the PRS can be transmitted by different base stations (serving and neighboring) using narrow beams over Frequency Range #1 Between ("FR1", e.g., frequencies from 410 MHz to 7125 MHz) and Frequency Range #2 ("FR2", e.g., frequencies from 24.25 GHz to 52.6 GHz), which is relatively different when compared to LTE where the PRS was transmitted across the whole cell.

As illustrated in Figure 3, a UE 305 may receive PRS from a first gNB ("gNB 3") 310, which is a serving gNB, and also from a neighboring second gNB ("gNB 1") 315, and a neighboring third gNB ("gNB 2") 320. Here, the PRS can be locally associated with a set of PRS Resources grouped under a Resource Set ID for a base station (e.g., TRP). In the depicted embodiments, each gNB 310, 315, 320 is configured with a first Resource Set ID 325 and a second Resource Set ID 330. As depicted, the UE 305 receives PRS on transmission beams; here, receiving PRS from the gNB 3 310 on a set of PRS Resources 335 from the second Resource Set ID 330, receiving PRS from the gNB 1 315 on a set of PRS Resources 335 from the second Resource Set ID 330, and receiving PRS from the gNB 2 320 on a set of PRS Resources 335 from the first Resource Set ID 325.

Similarly, UE positioning measurements such as Reference Signal Time Difference ("RSTD") and PRS RSRP measurements are made between beams as opposed to different cells as was the case in LTE. In addition, there are additional UL positioning methods for the network to exploit in order to compute the target UE's location. Table 3 and Table 4 show the reference signal to measurements mapping required for each of the supported RAT-dependent positioning techniques at the UE and gNB, respectively. RAT-dependent positioning techniques involve the 3GPP RAT and core network entities to perform the position estimation of the UE, which are differentiated from RAT-independent positioning techniques which rely on GNSS, IMU sensor, WLAN and Bluetooth technologies for performing target device (e.g., UE) positioning

**Table 3: UE Measurements to enable RAT-dependent positioning techniques**

| DL/UL Reference Signals | UE Measurements | To facilitate support of the following positioning techniques |
|---|---|---|
| Rel-16 DL PRS | DL RSTD | DL-TDOA |
| Rel-16 DL PRS | DL PRS RSRP | DL-TDOA, DL-AoD, Multi-RTT |
| Rel-16 DL PRS / Rel-16 SRS for positioning | UE Rx-Tx time difference | Multi-RTT |
| Rel. 15 SSB / CSI-RS for RRM | SS-RSRP(RSRP for RRM), SS-RSRQ(for RRM), CSI-RSRP (for RRM), CSI-RSRQ (for RRM), SS-RSRPB (for RRM) | E-CID |

**Table 4: gNB Measurements to enable RAT-dependent positioning techniques**

| DL/UL Reference Signals | gNB Measurements | To facilitate support of the following positioning techniques |
|---|---|---|
| Rel-16 SRS for positioning | UL RTOA | UL-TDOA |
| Rel-16 SRS for positioning | UL SRS-RSRP | UL-TDOA, UL-AoA, Multi-RTT |
| Rel-16 SRS for positioning, Rel-16 DL PRS | gNB Rx-Tx time difference | Multi-RTT |
| Rel-16 SRS for positioning, | A-AoA and Z-AoA | UL-AoA, Multi-RTT |

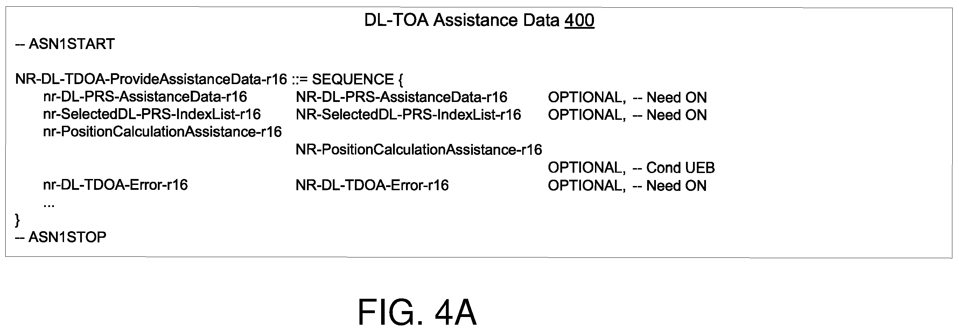

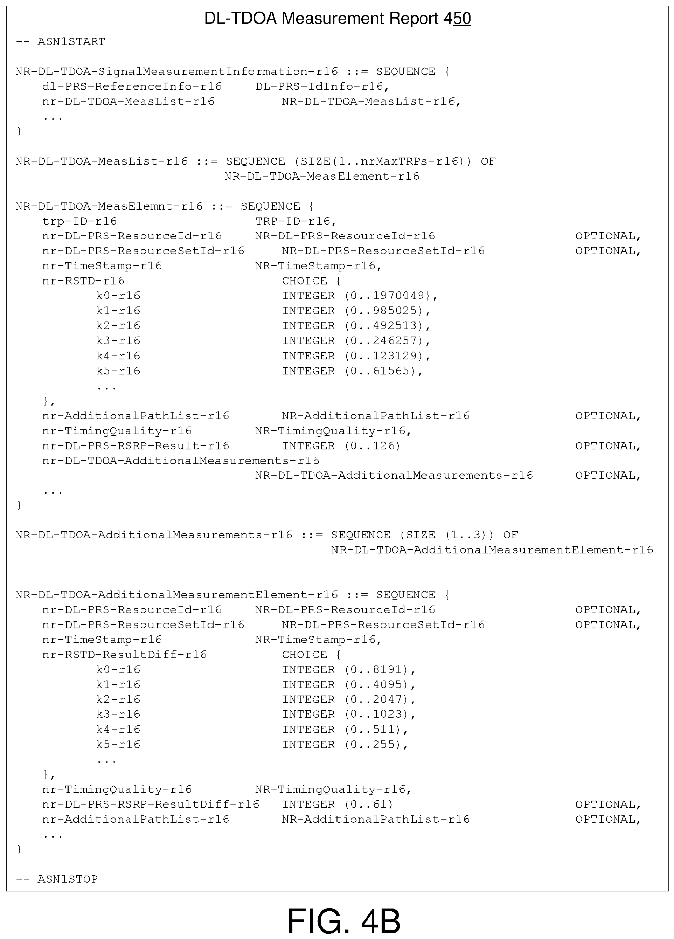

According to TS38.215, UE measurements have been defined, which are applicable to DL-based positioning techniques (see subclause 2.5). For a conceptual overview of the current implementation in Rel-16, the DL-TDOA assistance data configurations (see Figure 4A) and measurement reporting information (see Figure 4B) are provided as illustrative examples. The IE *NR-DL-TDOA-ProvideAssistanceData,* shown in Figure 4A, is used by the location server to provide assistance data to enable UE-assisted and UE-based NR downlink TDOA. It may also be used to provide NR DL TDOA positioning specific error reason.

The IE *NR-DL-TDOA-SignalMeasurementInformation,* shown in Figure 4B, is used by the target device to provide NR-DL TDOA measurements to the location server. The measurements are provided as a list of TRPs, where the first TRP in the list is used as reference TRP in case RSTD measurements are reported. The first TRP in the list may or may not be the reference TRP indicated in the *NR-DL-PRS-AssistanceData.* Furthermore, the target device selects a reference resource per TRP, and compiles the measurements per TRP based on the selected reference resource.

The different DL measurements including DL PRS-RSRP, DL RSTD and UE Rx-Tx Time Difference required for the supported RAT-dependent positioning techniques are shown in Table 5. The following measurement configurations are specified, e.g., in TS 38.215:
i. 4 Pair of DL RSTD measurements can be performed per pair of cells. Each measurement is performed between a different pair of DL PRS Resources/Resource Sets with a single reference timing.
ii. 8 DL PRS RSRP measurements can be performed on different DL PRS resources from the same cell.

**Table 1: DL Measurements required for DL-based positioning methods**

| DL PRS reference signal received power (DL PRS-RSRP) | |
|---|---|
| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. |
| | For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
| Applicable for | RRC_CONNECTED intra-frequency, |
| | RRC_CONNECTED inter-frequency |

| DL reference signal time difference (DL RSTD) | |
|---|---|
| Definition | DL reference signal time difference (DL RSTD) is the DL relative timing difference between the positioning node *j* and the reference positioning node *i,* defined as T_{SubframeRxj} - T_{SubframeRxi}, |
| | Where: |
| | T_{SubframeRxj} is the time when the UE receives the start of one subframe from positioning node *j*. |
| | T_{SubframeRxi} is the time when the UE receives the corresponding start of one subframe from positioning node *i* that is closest in time to the subframe received from positioning node*j*. |
| | Multiple DL PRS resources can be used to determine the start of one subframe from a positioning node. |
| | For frequency range 1, the reference point for the DL RSTD shall be the antenna connector of the UE. For frequency range 2, the reference point for the DL RSTD shall be the antenna of the UE. |
| Applicable for | RRC_CONNECTED intra-frequency |
| | RRC_CONNECTED inter-frequency |

| UE Rx - Tx time difference | |
|---|---|
| Definition | The UE Rx - Tx time difference is defined as T_{UE-RX} - T_{UE-TX} |
| | Where: |
| | T_{UE-RX} is the UE received timing of downlink subframe #i from a positioning node, defined by the first detected path in time. |
| | T_{UE-TX} is the UE transmit timing of uplink subframe #*j* that is closest in time to the subframe #i received from the positioning node. |
| | Multiple DL PRS resources can be used to determine the start of one subframe of the first arrival path of the positioning node. |
| | For frequency range 1, the reference point for T_{UE-RX} measurement shall be the Rx antenna connector of the UE and the reference point for T_{UE-TX} measurement shall be the Tx antenna connector of the UE. For frequency range 2, the reference point for T_{UE-RX} measurement shall be the Rx antenna of the UE and the reference point for T_{UE-TX} measurement shall be the Tx antenna of the UE. |
| Applicable for | RRC_CONNECTED intra-frequency |
| | RRC_CONNECTED inter-frequency |

In one embodiment, the present disclosure provides the following high-level conceptual solutions for enabling positioning measurement reporting in RRC_INACTIVE state: (1) a method to enable the UE to segment the positioning measurement report based on a set of configured criteria for transmission in RRC_INACTIVE state, which may include positioning method (applicable to either RAT-dependent or RAT-independent positioning methods), positioning latency budget (including time to first fix ("TTFF"), measurement report response times (e.g., the time as measured between receipt of the *RequestLocationInformation* and transmission of a *ProvideLocationInformation* message)), a size of the positioning measurement report, and a required positioning quality of service ("QoS") including accuracy by a location services client or application; (2) a method wherein the LPP segmentation of the UE's or group of UE's positioning report is self-decodable at the LMF (in no specific order); and (3) a method for a UE to segment the positioning measurement report based on UE-assisted positioning methods and/or UE-based positioning methods.

In one embodiment, the subject matter herein provides higher layer segmentation criteria that enables the LMF 144 to receive the required information at the desired time given the message size constraints of SDT UL transmissions in RRC_INACTIVE state. In one embodiment, the criteria is based on a flexible configuration criteria depending on the requirements of the LCS client or application function such as accuracy or end-to-end latency.

In a first embodiment, a RAT-dependent positioning reporting segmentation criteria is disclosed. In one embodiment, the RAT-dependent positioning reporting segmentation criteria is based on a type of positioning method.

For instance, this embodiment describes the solutions for enabling a UE configured segmentation of the positioning measurement report for transmissions using SDT in a low power consumption state, e.g., RRC_INACTIVE or RRC_IDLE state.

In such an embodiment. the network (e.g., LMF 144) may request the segmentation of the positioning report beforehand by enabling a segmentation flag. This may be triggered via the LMF awareness of the RRC state in which the UE is operating. In one embodiment, this is explicitly triggered via an LMF request using the NR positioning protocol A ("NRPPa") interface to the gNB (e.g., NG-RAN node) about the RRC state of operation of the UE. The gNB may either respond with an explicit state flag, e.g., a flag corresponding to RRC_CONNECTED, RRC_INACTIVE or RRC_IDLE state. In some implementations, the gNB may also signal the data volume threshold to the LMF, which is used by the UE to trigger the transmission using SDT.

In one embodiment, the LMF 144 configures the expected positioning report information to meet the UE data volume threshold requirements, accordingly. In another implementation, the gNB implicitly informs the LMF 144 about the state of the UE based on the information of the TRPs associated to a gNB e.g., based on the measurement time configuration of the PRS configuration and/or synchronization signal block ("SSB") configuration or in other implementations a discontinuous reception ("DRX") configuration.

In another implementation, the AMF 143 may provide information about the UE RRC state to the serving LMF 144. In one embodiment, the LMF 144 may derive this information through capability signaling that indicates whether the UE or group of UEs can perform any one or more combinations of positioning measurements corresponding to a positioning technique in RRC_INACTIVE/RRC_IDLE state.

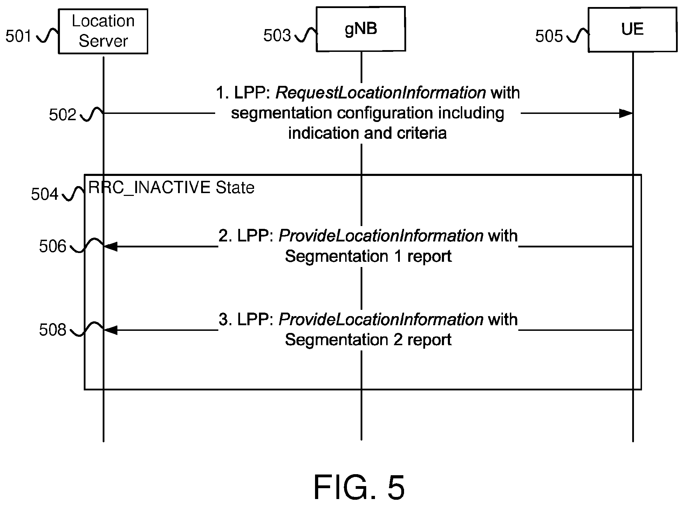

In one embodiment, shown in Figure 5, the capability signaling indication can be signaled to the UE 505 via LPP e.g., using the *RequestLocationInformation* message (see messaging 502) from the location server 501 while in RRC_CONNECTED state using the RRC *DLInformationTransfer* message, e.g., LMF 501 to the UE 505 as seen in Figure 5. In another implementation, the location server 501 signals the capability indication to the UE 505 along with the RRC release message, which releases the UE into the RRC_INACTIVE state 504 and contains the SDT configuration for the RRC_INACTIVE state 504 (including e.g., the data volume threshold set by the gNB for SDT UL transmissions). In one embodiment, while in the RRC_INACTIVE state 504, the UE 505 transmits via LPP, e.g., using the *ProvideLocationInformation* message (see messaging 506, 508), segments of the positioning report.

In an alternative implementation, if the gNB 503 has LMF functionality (e.g., location measurement unit ("LMU") capabilities) or is co-located with an LMF 501, the segmentation criteria may be configured to the UE 505, e.g., via RRC signaling by the gNB 503 (NG-RAN).

In one embodiment, depending on the configured measurements for a UE or group of UEs, the information and size of the positioning measurement report may vary. The LMF 144 may send a request to the UE to prioritize and segment the report according to one or more following combinations of RAT-dependent positioning methods:
i. NR DL-TDOA
ii. NR Multi-RTT
iii. DL-AoD
iv. NR E-CID
v. OTDOA (LTE Positioning)
vi. E-CID (LTE Positioning)

The reporting size can vary for each of the positioning techniques, e.g., DL-AoD requires measurement reporting of at least one gNB, while DL-TDOA requires measurement reporting from at least three gNBs for an improved location estimate. If the LMF 144 has configured one or more positioning techniques to the UE for reporting, it may request the UE to initially report DL-AOD measurements in Segmentation 1 of the report using an SDT-based procedure, like, for example, SDT UL CG-based transmissions or random access channel ("RACH")-SDT with subsequent transmissions, and then report the measurements related to the other remaining configured positioning techniques in subsequent segments (e.g., Segmentation 2, 3, and so on).

It should be noted that the proposed positioning report segments, in one embodiment, are self-decodable and do not depend on other segments for correct decoding, e.g., in case of NR-DL-TDOA, each segment of a positioning report carries a complete *NR-DL-TDOA-SignalMeasurementInformation,* but with a limited set of measurements. In one example, there is an indication from a higher layer (e.g., LPP or RRC) to the application service ("AS") layer, e.g., PDCP layer, about the different segments, e.g., an indication that identifies the first segment that the UE may transmit using an SDT-based procedure.

In another implementation, the LMF 144 may send a request to the UE to initially report DL-AoD measurements in Segmentation 1 of the report using an SDT-based mechanism like e.g., SDT UL CG-based transmissions and then report the measurements related to the other remaining configured positioning techniques in subsequent segments (e.g., Segmentation 2, 3, and so on) in RRC_CONNECTED state. In one example, a UE considers the first segment (e.g., Segmentation 1) of a measurement positioning report to determine whether to perform an SDT or non-SDT procedure, e.g., Segmentation 1 is considered for data volume calculation. It should be noted that there is a data volume threshold that is used for the UE to decide whether to perform an SDT-based procedure or not, e.g., legacy RRC resume procedure. For cases where the UE has more data available for transmission than the configured threshold, the UE performs a legacy RRC resume procedure and transmits the data in RRC_CONNECTED.

In another implementation, the UE may autonomously configure the report segments based on positioning techniques in the absence of any indication from the LMF 144; however, the UE indicates to the LMF 144 that the report has been segmented accordingly.

It should be noted that this segmentation criteria may also be applicable to Uu and/or sidelink positioning methods.

In further embodiments, the RAT-dependent positioning reporting segmentation criteria is based on positioning latency. In such an embodiment, mechanisms are provided in which the report may be segmented based on prioritized measurements configured by the LMF 144 or response times required by the LMF 144 based on the assistance data configuration. In one embodiment, the UE segments the report with a specified priority of the positioning method type to transmit using an SDT-based procedure, e.g., the SDT CG-based mechanism or RACH-SDT with subsequent transmissions in RRC_INACTIVE state. Table 6 is one embodiment of indications of the mapping from priority to positioning report segments that can be indicated to the UE.

**Table 6: Mapping of Priority to Report Segments**

| Priority | Positioning Method Type | Report Segment |
|---|---|---|
| 1 | NR Multi-RTT | Segment 1 |
| 2 | DL-AoD | Segment 2 |
| 3 | NR DL-TDOA | Segment 3 |
| 4 | NR E-CID | Segment 4 |

In another implementation, the LMF 144 may send a request to the UE to initially report a set of prioritized segments of the report, e.g., Segments 1 and 2, using SDT UL CG-based transmissions and then report the measurements related to the other remaining configured positioning techniques in subsequent segments, e.g., Segments 3 and 4, in an RRC_CONNECTED state. In one example, the UE considers the first segment (Segmentation 1) of a measurement positioning report to determine whether to perform an SDT or non-SDT procedure, e.g., Segmentation 1 is considered for data volume calculation. It should be noted that there is a data volume threshold that is used for the UE to decide whether to perform SDT-based procedure or not, e.g., legacy RRC resume procedure. For cases where the UE has more data available for transmission than the configured threshold, the UE performs a legacy RRC resume procedure and transmits the data in RRC_CONNECTED.

In another implementation, the UE may autonomously configure the report segments based on a self-assigned priority in the absence of any indication from the LMF 144; however, the UE indicates to the LMF 144 that the report has been segmented accordingly.

In one embodiment, the RAT-dependent positioning reporting segmentation criteria is based on positioning QoS. In this embodiment, the LMF 144 may enable the UE to segment the report based on the positioning QoS at the external or internal LCS Client or Application Function. Based on the positioning QoS, the LMF 144 indicates to the UE to trigger the transmission of report segments with preferable positioning QoS levels.

The LMF 144 may configure a QoS set to be reported using SDT CG-based transmissions, as seen in Table 7.

**Table 7: Mapping of QoS to Report Segments**

| QoS | Report Segment |
|---|---|
| Set 1 | Segment 1 |
| Set 2 | Segment 2 |
| Set 3 | Segment 3 |

Ideally, the accuracy requirements should be maintained for both RRC_CONNECTED and RRC_INACTIVE/RRC_IDLE states; however, the nature of measurements performed in either state may be different based on measurement occasions and periodicity. A QoS set, in one embodiment, comprises different parameters associated with a computed location estimate based on the measurement accuracy and may include the following parameters: horizontal Accuracy (including confidence interval); vertical Accuracy (including confidence interval); and response time.

In one embodiment, the LMF 144 weighs or prioritizes each of the above positioning key performance indicators ("KPIs") based on the application requirements within a QoS set. For example, if horizontal accuracy is a key requirement, then this QoS set will be transmitted within the initial segments, e.g., the first segment (Segment 1). In this case, an accuracy or confidence interval threshold may be configured such that if the threshold criteria are met, then the applicable QoS set is transmitted within the first segment. The response time set by the LMF 144 may also determine if the QoS set is transmitted in the initial segments within the configured time. Lower response times may be transmitted in the initial segments, e.g., Segment 1, while higher response time can be transmitted in later segments. The LMF 144 may also weigh one or more positioning KPIs together as part of a QoS set to be transmitted within the initial segment, e.g., horizontal accuracy, vertical accuracy, and response time.

In other implementations, additional KPI parameters may be part of the same QoS set such as:
a. Relative Positioning Accuracy:
   i. Relative horizontal and vertical accuracies
   ii. Lateral and longitudinal accuracies in the case of V2X
b. Orientation accuracy:
   i. Absolute or relative orientations
c. Mobility:
   i. Absolute velocity (horizontal and vertical velocity estimates)
   ii. Relative velocity
d. Integrity and Reliability of the positioning estimate:
   i. Alert limit ("AL"): The maximum allowable positioning error such that the positioning system is available for the intended application. If the positioning error is beyond the AL, operations are hazardous, and the positioning system should be declared unavailable for the intended application to prevent loss of integrity.
      1. NOTE: When the AL bounds the positioning error in the horizontal plane or on the vertical axis then it is called Horizontal Alert Limit ("HAL") or Vertical Alert Limit ("VAL") respectively.
   ii. Time to alert ("TTA"): The probability that the positioning error exceeds the Alert Limit ("AL") without warning the user within the required Time-to-Alert ("TTA").
      1. NOTE: The target integrity risk ("TIR") is usually defined as a probability rate per some time unit (e.g., per hour, per second, or per independent sample).
   iii. Target Integrity Risk ("TIR"): The maximum allowable elapsed time from when the positioning error exceeds the Alert Limit ("AL") until the function providing position integrity annunciates a corresponding alert.

Depending on the above parameters, the UE may segment the report accordingly based on one or more metrics including horizontal accuracy, vertical accuracy, and response time. In another implementation, the response time may be a function of expected end-to-end latency and/or physical layer latency.

In another implementation, the LMF 144 may request the UE to initially report a set of QoS-based segments of the report, e.g., Segment 1, using SDT UL CG-based transmissions and then report the location estimate related to the other QoS sets, e.g., Segments 2 and 3, in subsequent segments while in an RRC_CONNECTED state, e.g., based on the data volume calculation of each positioning report segments.

In another implementation, the UE may autonomously configure the report segments based on self-assigned QoS metrics in the absence of any indication from the LMF 144; however, the UE indicates to the LMF that the report has been segmented accordingly.

Embodiment 1 above described the segmentation from a RAT-dependent perspective, while Embodiment 2 considers the segmentation of the report based on both RAT-dependent and RAT-independent measurements. Depending on the configured measurements for a UE, or group of UEs, the information and size of the positioning measurement report may vary. The LMF 144, in one embodiment, may send a request to the UE to prioritize and segment the report according to one or more of the following combinations of RAT-independent positioning methods based on:
a. Global navigation satellite systems (e.g., A-GNSS);
b. Sensor-based positioning (e.g., using an inertial measurement unit "IMU");
c. Wireless local area network ("WLAN")-based positioning;
d. Bluetooth^{®} (or other short-range wireless protocol); and/or
e. Terrestrial Beacon System ("TBS") positioning.

In another implementation, ultra wideband ("UWB")-based positioning methods may also be considered as RAT-independent positioning techniques.

The LMF 144 may send a request to the UE to segment the positioning report for SDT UL transmissions according to:
a. Only RAT-independent positioning techniques;
b. Only RAT-dependent positioning techniques (as described in Embodiment 1 above); and/or
c. One or more combinations of RAT-dependent and RAT-independent positioning methods.

Embodiment 3 outlines the mechanisms in which the positioning report segments are configured to be self-decodable at the LMF 144. The UE may perform segmentation of the positioning report to transmit in RRC_INACTIVE state on the LPP layer such that each segment is self-contained and self-decodable at the LMF 144. This implies that each segment of the positioning report is regarded as a standalone segment containing all requested measurements performed during an RRC_INACTIVE state. For the LMF 144 to process the report segments, each report segment may be associated with additional information, such as a segment ID and a segment number. Other additional information that is associated with a report segment may include a total expected number of segments and a segment size.

In one embodiment, if the gNB has not provided adequate UL grants to the UE for the transmission of one or more segments, the UE can be requested to switch to an RRC_CONNECTED state to perform the transmission of the positioning report with larger dynamic or CG UL grants that enable the transmission of the positioning report. As such, the segmentation of the positioning report can be performed based on the UL resource grant availability during RRC_INACTIVE state and the actual size of the positioning report.

Furthermore, the positioning report segmentation may be based on whether the UE or group of UEs is performing:
a. UE-assisted positioning methods, where the size of the report is large due to the amount of configured positioning methods and corresponding measurements; or
b. UE-based positioning methods, where the size of the positioning report is smaller due to the transmission of the location estimate of the UE.

In one implementation, the positioning report segmentation may be performed according to an on-demand DL-PRS request in either RRC_CONNECTED or RRC_INACTIVE state that is triggered via the LMF 144, where the measurements to be reported correspond to the on-demand DL-PRS configuration. In this case, the DL-PRS assistance data provided by the location server for a particular positioning technique, e.g., DL-TDOA, Multi-RTT, or the like, may not be sufficient to meet the positioning QoS for a particular location estimate request, and, as such, the UE requests one or more updated DL-PRS configurations or the LMF 144 triggers an on-demand PRS request e.g., an updated PRS comb-size (pattern), repetition configuration, periodicity and offset, muting options, and/or the like. As a result, the UE may perform additional measurements and may transmit additional reports, resulting in the creation of additional segments to be reported while in RRC_INACTIVE state.

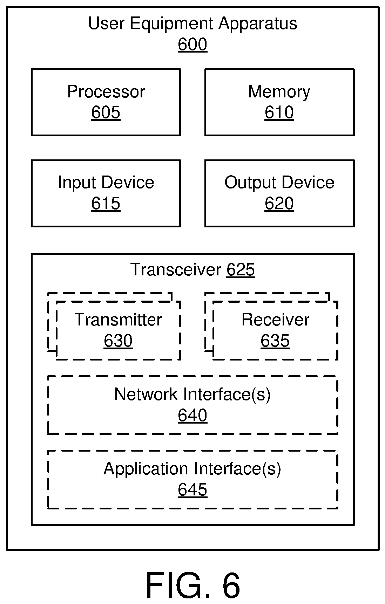

Figure 6 depicts a user equipment apparatus 600 that may be used for positioning measurement reporting using small data transmissions, according to embodiments of the disclosure. In various embodiments, the user equipment apparatus 600 is used to implement one or more of the solutions described above. The user equipment apparatus 600 may be one embodiment of the remote unit 105 and/or the UE 205, described above. Furthermore, the user equipment apparatus 600 may include a processor 605, a memory 610, an input device 615, an output device 620, and a transceiver 625.

In some embodiments, the input device 615 and the output device 620 are combined into a single device, such as a touchscreen. In certain embodiments, the user equipment apparatus 600 may not include any input device 615 and/or output device 620. In various embodiments, the user equipment apparatus 600 may include one or more of: the processor 605, the memory 610, and the transceiver 625, and may not include the input device 615 and/or the output device 620.

As depicted, the transceiver 625 includes at least one transmitter 630 and at least one receiver 635. In some embodiments, the transceiver 625 communicates with one or more cells (or wireless coverage areas) supported by one or more base units 121. In various embodiments, the transceiver 625 is operable on unlicensed spectrum. Moreover, the transceiver 625 may include multiple UE panels supporting one or more beams. Additionally, the transceiver 625 may support at least one network interface 640 and/or application interface 645. The application interface(s) 645 may support one or more APIs. The network interface(s) 640 may support 3GPP reference points, such as Uu, N1, PC5, etc. Other network interfaces 640 may be supported, as understood by one of ordinary skill in the art.

The processor 605, in one embodiment, may include any known controller capable of executing computer-readable instructions and/or capable of performing logical operations. For example, the processor 605 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 605 executes instructions stored in the memory 610 to perform the methods and routines described herein. The processor 605 is communicatively coupled to the memory 610, the input device 615, the output device 620, and the transceiver 625.

In various embodiments, the processor 605 controls the user equipment apparatus 600 to implement the above-described UE behaviors. In certain embodiments, the processor 605 may include an application processor (also known as "main processor") which manages application-domain and operating system ("OS") functions and a baseband processor (also known as "baseband radio processor") which manages radio functions.

The memory 610, in one embodiment, is a computer readable storage medium. In some embodiments, the memory 610 includes volatile computer storage media. For example, the memory 610 may include a RAM, including dynamic RAM ("DRAM"), synchronous dynamic RAM ("SDRAM"), and/or static RAM ("SRAM"). In some embodiments, the memory 610 includes non-volatile computer storage media. For example, the memory 610 may include a hard disk drive, a flash memory, or any other suitable non-volatile computer storage device. In some embodiments, the memory 610 includes both volatile and non-volatile computer storage media.

In some embodiments, the memory 610 stores data related to positioning measurement reporting using small data transmissions. For example, the memory 610 may store various parameters, panel/beam configurations, resource assignments, policies, and the like as described above. In certain embodiments, the memory 610 also stores program code and related data, such as an operating system or other controller algorithms operating on the apparatus 600.

The input device 615, in one embodiment, may include any known computer input device including a touch panel, a button, a keyboard, a stylus, a microphone, or the like. In some embodiments, the input device 615 may be integrated with the output device 620, for example, as a touchscreen or similar touch-sensitive display. In some embodiments, the input device 615 includes a touchscreen such that text may be input using a virtual keyboard displayed on the touchscreen and/or by handwriting on the touchscreen. In some embodiments, the input device 615 includes two or more different devices, such as a keyboard and a touch panel.

The output device 620, in one embodiment, is designed to output visual, audible, and/or haptic signals. In some embodiments, the output device 620 includes an electronically controllable display or display device capable of outputting visual data to a user. For example, the output device 620 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 620 may include a wearable display separate from, but communicatively coupled to, the rest of the user equipment apparatus 600, such as a smart watch, smart glasses, a heads-up display, or the like. Further, the output device 620 may be a component of a smart phone, a personal digital assistant, a television, a table computer, a notebook (laptop) computer, a personal computer, a vehicle dashboard, or the like.

In certain embodiments, the output device 620 includes one or more speakers for producing sound. For example, the output device 620 may produce an audible alert or notification (e.g., a beep or chime). In some embodiments, the output device 620 includes one or more haptic devices for producing vibrations, motion, or other haptic feedback. In some embodiments, all, or portions of the output device 620 may be integrated with the input device 615. For example, the input device 615 and output device 620 may form a touchscreen or similar touch-sensitive display. In other embodiments, the output device 620 may be located near the input device 615.

The transceiver 625 communicates with one or more network functions of a mobile communication network via one or more access networks. The transceiver 625 operates under the control of the processor 605 to transmit messages, data, and other signals and to receive messages, data, and other signals. For example, the processor 605 may selectively activate the transceiver 625 (or portions thereof) at times to send and receive messages.

The transceiver 625 includes at least transmitter 630 and at least one receiver 635. One or more transmitters 630 may be used to provide UL communication signals to a base unit 121, such as the UL transmissions described herein. Similarly, one or more receivers 635 may be used to receive DL communication signals from the base unit 121, as described herein. Although only one transmitter 630 and one receiver 635 are illustrated, the user equipment apparatus 600 may have any suitable number of transmitters 630 and receivers 635. Further, the transmitter(s) 630 and the receiver(s) 635 may be any suitable type of transmitters and receivers. In one embodiment, the transceiver 625 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 625, transmitters 630, and receivers 635 may be implemented as physically separate components that access a shared hardware resource and/or software resource, such as for example, the network interface 640.

In various embodiments, one or more transmitters 630 and/or one or more receivers 635 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 630 and/or one or more receivers 635 may be implemented and/or integrated into a multi-chip module. In some embodiments, other components such as the network interface 640 or other hardware components/circuits may be integrated with any number of transmitters 630 and/or receivers 635 into a single chip. In such embodiment, the transmitters 630 and receivers 635 may be logically configured as a transceiver 625 that uses one more common control signals or as modular transmitters 630 and receivers 635 implemented in the same hardware chip or in a multi-chip module.

In one embodiment, the transceiver 625 receives, from a location server of a network, a positioning report segmentation configuration comprising a set of segmentation criteria for segmenting a positioning report for transmission to the network. In one embodiment, the processor 605 segments the positioning report according to the set of segmentation criteria. In one embodiment, the transceiver 625 transmits the segmented positioning report to the network using a small data transmission ("SDT") uplink connection in a low power state.

In one embodiment, the low power state comprises one of an RRC_INACTIVE state and an RRC_IDLE state.

In one embodiment, the set of segmentation criteria for the positioning report comprises a type of positioning method used to generate the positioning report, the type of positioning method comprising one or more of a RAT-dependent method and a RAT-independent method.

In one embodiment, the set of segmentation criteria for the positioning report comprises a priority of requested positioning measurements associated with a positioning method.

In one embodiment, the set of segmentation criteria for the positioning report comprises a positioning quality of service ("QoS") of one or more positioning measurements.

In one embodiment, segments of the positioning report that are transmitted are self-decodable and self-contained.

In one embodiment, a first portion of the positioning report segments are transmitted in an RRC_INACTIVE state and a second portion of the positioning report segments are transmitted in an RRC_CONNECTED state according to an indication received from the network.

In one embodiment, the processor 605 autonomously configures and segments the positioning report for small data transmission in RRC_INACTIVE state.

In one embodiment, the transceiver 625 receives an indication to perform report segmentation from the network in an RRC_CONNECTED state prior to transitioning to an RRC_INACTIVE state.

In one embodiment, the transceiver 625 transmits the segmented positioning report using one of a configured grant SDT and a random-access channel SDT.

In one embodiment, the processor 605 detects a trigger for transmitting the segmented positioning report using SDT, the trigger comprising a segment of the positioning report satisfying a data volume threshold.

In one embodiment, the transceiver 625 transmits, to the network, capability information for performing positioning measurements corresponding to a positioning technique in the low power state.

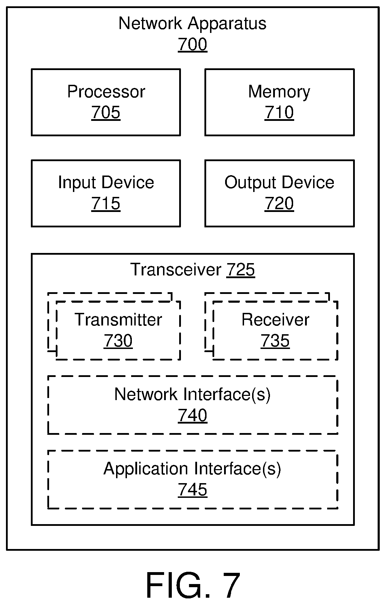

Figure 7 depicts a network apparatus 700 that may be used for positioning measurement reporting using small data transmissions, according to embodiments of the disclosure. In one embodiment, network apparatus 700 may be one implementation of a RAN node, such as the base unit 121 and/or the RAN node 210, as described above. Furthermore, the base network apparatus 700 may include a processor 705, a memory 710, an input device 715, an output device 720, and a transceiver 725.

In some embodiments, the input device 715 and the output device 720 are combined into a single device, such as a touchscreen. In certain embodiments, the network apparatus 700 may not include any input device 715 and/or output device 720. In various embodiments, the network apparatus 700 may include one or more of: the processor 705, the memory 710, and the transceiver 725, and may not include the input device 715 and/or the output device 720.

As depicted, the transceiver 725 includes at least one transmitter 730 and at least one receiver 735. Here, the transceiver 725 communicates with one or more remote units 175. Additionally, the transceiver 725 may support at least one network interface 740 and/or application interface 745. The application interface(s) 745 may support one or more APIs. The network interface(s) 740 may support 3GPP reference points, such as Uu, N1, N2 and N3. Other network interfaces 740 may be supported, as understood by one of ordinary skill in the art.

The processor 705, in one embodiment, may include any known controller capable of executing computer-readable instructions and/or capable of performing logical operations. For example, the processor 705 may be a microcontroller, a microprocessor, a CPU, a GPU, an auxiliary processing unit, a FPGA, or similar programmable controller. In some embodiments, the processor 705 executes instructions stored in the memory 710 to perform the methods and routines described herein. The processor 705 is communicatively coupled to the memory 710, the input device 715, the output device 720, and the transceiver 725.

In various embodiments, the network apparatus 700 is a RAN node (e.g., gNB) that communicates with one or more UEs, as described herein. In such embodiments, the processor 705 controls the network apparatus 700 to perform the above-described RAN behaviors. When operating as a RAN node, the processor 705 may include an application processor (also known as "main processor") which manages application-domain and operating system ("OS") functions and a baseband processor (also known as "baseband radio processor") which manages radio functions.

The memory 710, in one embodiment, is a computer readable storage medium. In some embodiments, the memory 710 includes volatile computer storage media. For example, the memory 710 may include a RAM, including dynamic RAM ("DRAM"), synchronous dynamic RAM ("SDRAM"), and/or static RAM ("SRAM"). In some embodiments, the memory 710 includes non-volatile computer storage media. For example, the memory 710 may include a hard disk drive, a flash memory, or any other suitable non-volatile computer storage device. In some embodiments, the memory 710 includes both volatile and non-volatile computer storage media.

In some embodiments, the memory 710 stores data related to positioning measurement reporting using small data transmissions. For example, the memory 710 may store parameters, configurations, resource assignments, policies, and the like, as described above. In certain embodiments, the memory 710 also stores program code and related data, such as an operating system or other controller algorithms operating on the apparatus 700.

The input device 715, in one embodiment, may include any known computer input device including a touch panel, a button, a keyboard, a stylus, a microphone, or the like. In some embodiments, the input device 715 may be integrated with the output device 720, for example, as a touchscreen or similar touch-sensitive display. In some embodiments, the input device 715 includes a touchscreen such that text may be input using a virtual keyboard displayed on the touchscreen and/or by handwriting on the touchscreen. In some embodiments, the input device 715 includes two or more different devices, such as a keyboard and a touch panel.

The output device 720, in one embodiment, is designed to output visual, audible, and/or haptic signals. In some embodiments, the output device 720 includes an electronically controllable display or display device capable of outputting visual data to a user. For example, the output device 720 may include, but is not limited to, an LCD display, an LED display, an OLED display, a projector, or similar display device capable of outputting images, text, or the like to a user. As another, non-limiting, example, the output device 720 may include a wearable display separate from, but communicatively coupled to, the rest of the network apparatus 700, such as a smart watch, smart glasses, a heads-up display, or the like. Further, the output device 720 may be a component of a smart phone, a personal digital assistant, a television, a table computer, a notebook (laptop) computer, a personal computer, a vehicle dashboard, or the like.

In certain embodiments, the output device 720 includes one or more speakers for producing sound. For example, the output device 720 may produce an audible alert or notification (e.g., a beep or chime). In some embodiments, the output device 720 includes one or more haptic devices for producing vibrations, motion, or other haptic feedback. In some embodiments, all, or portions of the output device 720 may be integrated with the input device 715. For example, the input device 715 and output device 720 may form a touchscreen or similar touch-sensitive display. In other embodiments, the output device 720 may be located near the input device 715.

The transceiver 725 includes at least transmitter 730 and at least one receiver 735. One or more transmitters 730 may be used to communicate with the UE, as described herein. Similarly, one or more receivers 735 may be used to communicate with network functions in the PLMN and/or RAN, as described herein. Although only one transmitter 730 and one receiver 735 are illustrated, the network apparatus 700 may have any suitable number of transmitters 730 and receivers 735. Further, the transmitter(s) 730 and the receiver(s) 735 may be any suitable type of transmitters and receivers.

In one embodiment, the transceiver 725 receives, from a user equipment ("UE") device, capability information for performing positioning measurements corresponding to a positioning technique in a low power state. In one embodiment, the processor 705 determines a positioning report segmentation configuration comprising a set of segmentation criteria for segmenting a positioning report based on the capability information. In one embodiment, the transceiver 725 transmits, to the UE device, the positioning report segmentation configuration. In one embodiment, the transceiver receives, from the UE device, the segmented positioning report using a small data transmission ("SDT") connection to the UE.

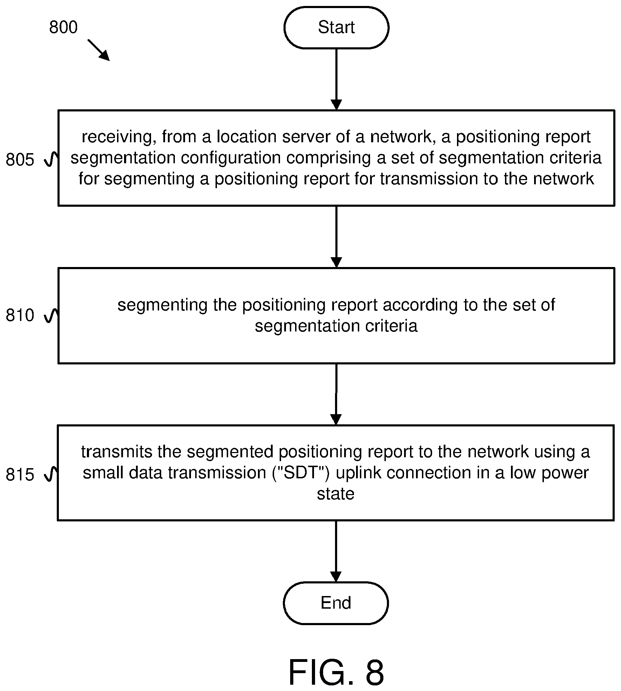

Figure 8 depicts one embodiment of a method 800 for positioning measurement reporting using small data transmissions, according to embodiments of the disclosure. In various embodiments, the method 800 is performed by a user equipment device in a mobile communication network, such as the remote unit 105, the UE 205, and/or the user equipment apparatus 600, described above. In some embodiments, the method 800 is performed by a processor, such as a microcontroller, a microprocessor, a CPU, a GPU, an auxiliary processing unit, a FPGA, or the like.

In one embodiment, the method 800 begins and receives 805, from a location server of a network, a positioning report segmentation configuration comprising a set of segmentation criteria for segmenting a positioning report for transmission to the network. In one embodiment, the method 800 segments 810 the positioning report according to the set of segmentation criteria. In one embodiment, the method 800 transmits 815 the segmented positioning report to the network using a small data transmission ("SDT") uplink connection in a low power state, and the method 800 ends.

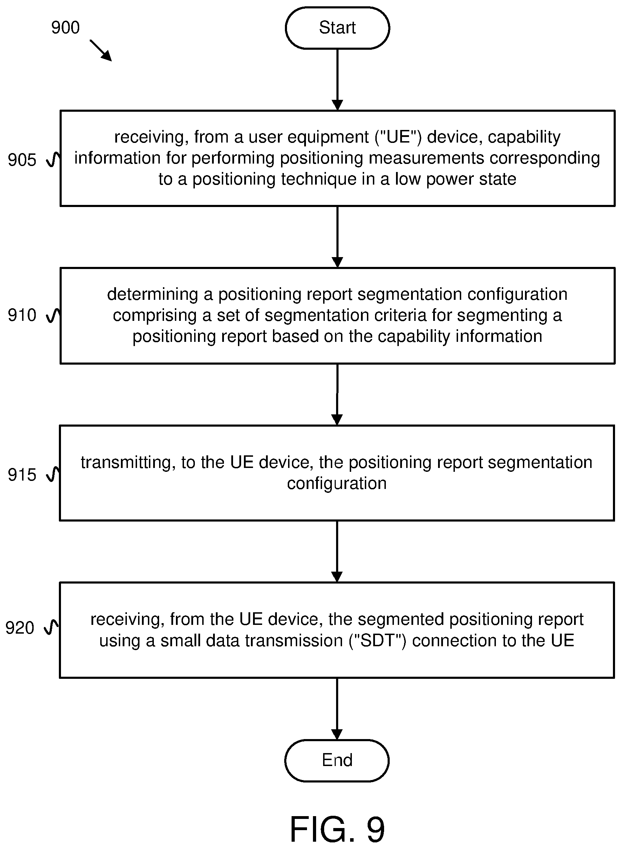

Figure 9 depicts one embodiment of a method 900 for positioning measurement reporting using small data transmissions, according to embodiments of the disclosure. In various embodiments, the method 900 is performed by a network function, e.g., a location management function, a network equipment apparatus 700, such as base unit 121, a location server 144, and/or the like. In some embodiments, the method 900 is performed by a processor, such as a microcontroller, a microprocessor, a CPU, a GPU, an auxiliary processing unit, a FPGA, or the like.

In one embodiment, the method 900 begins and receives 905, from a user equipment ("UE") device, capability information for performing positioning measurements corresponding to a positioning technique in a low power state. In one embodiment, the method 900 determines 910 a positioning report segmentation configuration comprising a set of segmentation criteria for segmenting a positioning report based on the capability information. In one embodiment, the method 900 transmits 915, to the UE device, the positioning report segmentation configuration, and receives 920, from the UE device, the segmented positioning report using a small data transmission ("SDT") connection to the UE. The method 900 ends.

Disclosed herein is a first apparatus for positioning measurement reporting using small data transmissions, according to embodiments of the disclosure. The first apparatus may be implemented by a user equipment device in a mobile communication network, such as the remote unit 105, the UE 205, and/or the user equipment apparatus 600, described above. In one embodiment, the first apparatus is implemented by a processor, such as a microcontroller, a microprocessor, a CPU, a GPU, an auxiliary processing unit, a FPGA, or the like.

In one embodiment, the first apparatus includes a transceiver that receives, from a location server of a network, a positioning report segmentation configuration comprising a set of segmentation criteria for segmenting a positioning report for transmission to the network. In one embodiment, the first apparatus includes a processor that segments the positioning report according to the set of segmentation criteria. In one embodiment, the transceiver transmits the segmented positioning report to the network using a small data transmission ("SDT") uplink connection in a low power state.

In one embodiment, the low power state comprises one of an RRC_INACTIVE state and an RRC_IDLE state.

In one embodiment, the set of segmentation criteria for the positioning report comprises a type of positioning method used to generate the positioning report, the type of positioning method comprising one or more of a RAT-dependent method and a RAT-independent method.

In one embodiment, the set of segmentation criteria for the positioning report comprises a priority of requested positioning measurements associated with a positioning method.

In one embodiment, the set of segmentation criteria for the positioning report comprises a positioning quality of service ("QoS") of one or more positioning measurements.

In one embodiment, segments of the positioning report that are transmitted are self-decodable and self-contained.

In one embodiment, a first portion of the positioning report segments are transmitted in an RRC_INACTIVE state and a second portion of the positioning report segments are transmitted in an RRC_CONNECTED state according to an indication received from the network.

In one embodiment, the processor autonomously configures and segments the positioning report for small data transmission in RRC_INACTIVE state.

In one embodiment, the transceiver receives an indication to perform report segmentation from the network in an RRC_CONNECTED state prior to transitioning to an RRC_INACTIVE state.

In one embodiment, the transceiver transmits the segmented positioning report using one of a configured grant SDT and a random-access channel SDT.

In one embodiment, the processor detects a trigger for transmitting the segmented positioning report using SDT, the trigger comprising a segment of the positioning report satisfying a data volume threshold.

In one embodiment, the transceiver transmits, to the network, capability information for performing positioning measurements corresponding to a positioning technique in the low power state.

Disclosed herein is a first method for positioning measurement reporting using small data transmissions, according to embodiments of the disclosure. The first method is performed by a user equipment device in a mobile communication network, such as the remote unit 105, the UE 205, and/or the user equipment apparatus 600, described above. In some embodiments, the first method is performed by a processor, such as a microcontroller, a microprocessor, a CPU, a GPU, an auxiliary processing unit, a FPGA, or the like.

In one embodiment, the first method receives, from a location server of a network, a positioning report segmentation configuration comprising a set of segmentation criteria for segmenting a positioning report for transmission to the network. In one embodiment, the first method segments the positioning report according to the set of segmentation criteria. In one embodiment, the first method transmits the segmented positioning report to the network using a small data transmission ("SDT") uplink connection in a low power state.

In one embodiment, the low power state comprises one of an RRC_INACTIVE state and an RRC_IDLE state.

In one embodiment, the set of segmentation criteria for the positioning report comprises a type of positioning method used to generate the positioning report, the type of positioning method comprising one or more of a RAT-dependent method and a RAT-independent method.

In one embodiment, the set of segmentation criteria for the positioning report comprises a priority of requested positioning measurements associated with a positioning method.

In one embodiment, the set of segmentation criteria for the positioning report comprises a positioning quality of service ("QoS") of one or more positioning measurements.

In one embodiment, segments of the positioning report that are transmitted are self-decodable and self-contained.

In one embodiment, a first portion of the positioning report segments are transmitted in an RRC_INACTIVE state and a second portion of the positioning report segments are transmitted in an RRC_CONNECTED state according to an indication received from the network.

In one embodiment, the first method autonomously configures and segments the positioning report for small data transmission in RRC_INACTIVE state.

In one embodiment, the first method receives an indication to perform report segmentation from the network in an RRC_CONNECTED state prior to transitioning to an RRC_INACTIVE state.

In one embodiment, the first method transmits the segmented positioning report using one of a configured grant SDT and a random-access channel SDT.

In one embodiment, the first method detects a trigger for transmitting the segmented positioning report using SDT, the trigger comprising a segment of the positioning report satisfying a data volume threshold.

In one embodiment, the first method transmits, to the network, capability information for performing positioning measurements corresponding to a positioning technique in the low power state.

Disclosed herein is a second apparatus for positioning measurement reporting using small data transmissions, according to embodiments of the disclosure. The second apparatus may be implemented by a network function, e.g., a location management function, a network equipment apparatus 700, such as base unit 121, a location server, and/or the like. In one embodiment, the second apparatus is implemented by a processor, such as a microcontroller, a microprocessor, a CPU, a GPU, an auxiliary processing unit, a FPGA, or the like.

In one embodiment, the second apparatus includes a transceiver that receives, from a user equipment ("UE") device, capability information for performing positioning measurements corresponding to a positioning technique in a low power state. In one embodiment, the second apparatus includes a processor that determines a positioning report segmentation configuration comprising a set of segmentation criteria for segmenting a positioning report based on the capability information. In one embodiment, the transceiver transmits, to the UE device, the positioning report segmentation configuration. In one embodiment, the transceiver receives, from the UE device, the segmented positioning report using a small data transmission ("SDT") connection to the UE.

Disclosed herein is a second method for positioning measurement reporting using small data transmissions, according to embodiments of the disclosure. The second method is performed by a network function, e.g., a location management function, a network equipment apparatus 700, such as base unit 121, a location server, and/or the like. In some embodiments, the second method is performed by a processor, such as a microcontroller, a microprocessor, a CPU, a GPU, an auxiliary processing unit, a FPGA, or the like.

In one embodiment, the second method receives, from a user equipment ("UE") device, capability information for performing positioning measurements corresponding to a positioning technique in a low power state. In one embodiment, the second method determines a positioning report segmentation configuration comprising a set of segmentation criteria for segmenting a positioning report based on the capability information. In one embodiment, the second method transmits, to the UE device, the positioning report segmentation configuration. In one embodiment, the transceiver receives, from the UE device, the segmented positioning report using a small data transmission ("SDT") connection to the UE.

Embodiments may be practiced in other specific forms. The described embodiments are to be considered in all respects only as illustrative and not restrictive. The scope of the invention is, therefore, indicated by the appended claims rather than by the foregoing description.

## Claims

1. A user equipment, UE, apparatus (600), the apparatus (600) comprising:
a transceiver (625) configured to receive, from a location server of a network, a positioning report segmentation configuration comprising a set of segmentation criteria for segmenting a positioning report for transmission to the network; and
a processor (605) configured to segment the positioning report according to the set of segmentation criteria,
wherein the transceiver (625) is configured to transmit the segmented positioning report to the network using a small data transmission, SDT, uplink connection in a low power state.

2. The apparatus (600) of claim 1, wherein the low power state comprises one of an RRC_INACTIVE state and an RRC_IDLE state.

3. The apparatus (600) of claim 1, wherein the set of segmentation criteria for the positioning report comprises a type of positioning method used to generate the positioning report, the type of positioning method comprising one or more of a RAT-dependent method and a RAT-independent method.

4. The apparatus (600) of claim 1, wherein the set of segmentation criteria for the positioning report comprises a priority of requested positioning measurements associated with a positioning method.

5. The apparatus (600) of claim 1, wherein the set of segmentation criteria for the positioning report comprises a positioning quality of service, QoS, of one or more positioning measurements.

6. The apparatus (600) of claim 1, wherein segments of the positioning report that are transmitted are self-decodable and self-contained.

7. The apparatus (600) of claim 1 configured to transmit a first portion of the positioning report segments in an RRC_INACTIVE state and a second portion of the positioning report segments in an RRC_CONNECTED state according to an indication received from the network.

8. The apparatus (600) of claim 1, wherein the processor (605) is configured to autonomously configure and segment the positioning report for small data transmission in RRC_INACTIVE state.

9. The apparatus (600) of claim 1, wherein the transceiver (625) is configured to receive an indication to perform report segmentation from the network in an RRC_CONNECTED state prior to transitioning to an RRC_INACTIVE state.

10. The apparatus (600) of claim 1, wherein the transceiver (625) is configured to transmit the segmented positioning report using one of a configured grant SDT and a random-access channel SDT.

11. The apparatus (600) of claim 1, wherein the processor (605) is configured to detect a trigger for transmitting the segmented positioning report using SDT, the trigger comprising a segment of the positioning report satisfying a data volume threshold.

12. The apparatus (600) of claim 1, wherein the transceiver (625) is configured to transmit, to the network, capability information for performing positioning measurements corresponding to a positioning technique in the low power state.

13. A method of user equipment, UE, device (600), the method comprising:
receiving, from a location server of a network, a positioning report segmentation configuration comprising a set of segmentation criteria for segmenting a positioning report for transmission to the network (805);
segmenting the positioning report according to the set of segmentation criteria (810); and
transmitting the segmented positioning report to the network using a small data transmission, SDT, uplink connection in a low power state (815).

14. A network function apparatus (700), the apparatus comprising:
a transceiver (725) configured to receive, from a user equipment, UE, device (600), capability information for performing positioning measurements corresponding to a positioning technique in a low power state; and
a processor (705) configured to determine a positioning report segmentation configuration comprising a set of segmentation criteria for segmenting a positioning report based on the capability information,
wherein the transceiver (725) is configured to:
transmit, to the UE device (600), the positioning report segmentation configuration; and
receive, from the UE device (600), the segmented positioning report using a small data transmission, SDT, connection to the UE device (600).

15. The apparatus (700) of claim 14, wherein the transceiver (725) is configured to receive, from a base station of a network (121), a discontinuous reception, DRX, configuration indicating a power state of the UE device (600).

## Patentansprüche

1. Benutzerendgerät-Einrichtung, UE-Einrichtung (600), wobei die Einrichtung (600) umfasst:
einen Sendeempfänger (625), der dafür konfiguriert ist, von einem Standort-Server eines Netzwerks eine Positionsbestimmungsbericht-Segmentierungskonfiguration zu empfangen, die eine Menge von Segmentierungskriterien zum Segmentieren eines Positionsbestimmungsberichts für die Übertragung zum Netzwerk umfasst; und
einen Prozessor (605), der dafür konfiguriert ist, den Positionsbestimmungsbericht gemäß der Menge von Segmentierungskriterien zu segmentieren,
wobei der Sendeempfänger (625) dafür konfiguriert ist, den segmentierten Positionsbestimmungsbericht unter Verwendung einer Aufwärtsstreckenverbindung für die Übertragung kleiner Datenmengen, SDT, in einem Energiesparzustand zum Netzwerk zu übertragen.

2. Einrichtung (600) nach Anspruch 1, wobei der Energiesparzustand eines von einem RRC_INACTIVE-Zustand und einem RRC_IDLE-Zustand umfasst.

3. Einrichtung (600) nach Anspruch 1, wobei die Menge von Segmentierungskriterien für den Positionsbestimmungsbericht einen Typ von Positionsbestimmungsverfahren umfasst, der verwendet wird, um den Positionsbestimmungsbericht zu erzeugen, wobei der Typ von Positionsbestimmungsverfahren eines oder mehrere von einem RATabhängigen Verfahren und einem RAT-unabhängigen Verfahren umfasst.

4. Einrichtung (600) nach Anspruch 1, wobei die Menge von Segmentierungskriterien für den Positionsbestimmungsbericht eine Priorität von angeforderten Positionsbestimmungsmessungen, die mit einem Positionsbestimmungsverfahren verknüpft sind, umfasst.

5. Einrichtung (600) nach Anspruch 1, wobei die Menge von Segmentierungskriterien für den Positionsbestimmungsbericht eine Dienstgüte, QoS, der Positionsbestimmung einer oder mehrerer Positionsbestimmungsmessungen umfasst.

6. Einrichtung (600) nach Anspruch 1, wobei Segmente des Positionsbestimmungsberichts, die übertragen werden, selbstdecodierbar und eigenständig sind.

7. Einrichtung (600) nach Anspruch 1, die dafür konfiguriert ist, gemäß einer vom Netzwerk empfangenen Angabe einen ersten Abschnitt der Positionsbestimmungsbericht-Segmente in einem RRC_INACTIVE-Zustand und einen zweiten Abschnitt der Positionsbestimmungsbericht-Segmente in einem RRC_CONNECTED- Zustand zu übertragen.

8. Einrichtung (600) nach Anspruch 1, wobei der Prozessor (605) dafür konfiguriert ist, den Positionsbestimmungsbericht autonom für die Übertragung kleiner Datenmengen im RRC_INACTIVE-Zustand zu konfigurieren und segmentieren.

9. Einrichtung (600) nach Anspruch 1, wobei der Sendeempfänger (625) dafür konfiguriert ist, in einem RRC_CONNECTED-Zustand eine Angabe vom Netzwerk zu empfangen, die Berichtsegmentierung durchzuführen, bevor in einen RRC_INACTIVE-Zustand übergegangen wird.

10. Einrichtung (600) nach Anspruch 1, wobei der Sendeempfänger (625) dafür konfiguriert ist, den segmentierten Positionsbestimmungsbericht unter Verwendung von einem von einer SDT mit konfigurierter Zuweisung und einer Direktzugriffskanal-SDT zu senden.

11. Einrichtung (600) nach Anspruch 1, wobei der Prozessor (605) dafür konfiguriert ist, einen Trigger zum Übertragen des segmentierten Positionsbestimmungsberichts unter Verwendung von SDT zu ermitteln, wobei der Trigger ein Segment des Positionsbestimmungsberichts umfasst, das einen Datenvolumen-Schwellenwert erfüllt.

12. Einrichtung (600) nach Anspruch 1, wobei der Sendeempfänger (625) dafür konfiguriert ist, Fähigkeitsinformationen zum Durchführen von Positionsbestimmungsmessungen entsprechend einer Positionsbestimmungsmethode im Energiesparzustand zum Netzwerk zu übertragen.

13. Verfahren für eine Benutzerendgerät-Vorrichtung, UE-Vorrichtung (600), wobei das Verfahren umfasst:
Empfangen einer Positionsbestimmungsbericht-Segmentierungskonfiguration von einem Standort-Server eines Netzwerks, die eine Menge von Segmentierungskriterien zum Segmentieren eines Positionsbestimmungsberichts für die Übertragung zum Netzwerk umfasst (805);
Segmentieren des Positionsbestimmungsberichts gemäß der Menge von Segmentierungskriterien (810); und
Übertragen des segmentierten Positionsbestimmungsberichts zum Netzwerk unter Verwendung einer Aufwärtsstreckenverbindung für die Übertragung kleiner Datenmengen, SDT, in einem Energiesparzustand (815).

14. Netzwerkfunktionseinrichtung (700), wobei die Einrichtung umfasst:
einen Sendeempfänger (725), der dafür konfiguriert ist, von einer Benutzerendgerät-Vorrichtung, UE-Vorrichtung (600), Fähigkeitsinformationen zum Durchführen von Positionsbestimmungsmessungen entsprechend einer Positionsbestimmungsmethode in einem Energiesparzustand zu empfangen; und
einen Prozessor (705), der dafür konfiguriert ist, eine Positionsbestimmungsbericht-Segmentierungskonfiguration zu bestimmen, die eine Menge von Segmentierungskriterien zum Segmentieren eines Positionsbestimmungsberichts auf der Grundlage der Fähigkeitsinformationen umfasst,
wobei der Sendeempfänger (725) dafür konfiguriert ist:
die Positionsbestimmungsbericht-Segmentierungskonfiguration zu der UE-Vorrichtung (600) zu übertragen; und
den segmentierten Positionsbestimmungsbericht von der UE-Vorrichtung (600) unter Verwendung einer Verbindung für die Übertragung kleiner Datenmengen (SDT) zu der UE-Vorrichtung (600) zu empfangen.

15. Einrichtung (700) nach Anspruch 14, wobei der Sendeempfänger (725) dafür konfiguriert ist, von einer Basisstation eines Netzwerks (121) eine Konfiguration für diskontinuierlichen Empfang, DRX, zu empfangen, die einen Stromverbrauchszustand der UE-Vorrichtung (600) angibt.

## Revendications

1. Appareil (600) équipement d'utilisateur, UE, l'appareil (600) comprenant :
un émetteur-récepteur (625) configuré pour recevoir, en provenance d'un serveur de localisation d'un réseau, une configuration de segmentation de rapport de positionnement comprenant un ensemble de critères de segmentation pour segmenter un rapport de positionnement pour une transmission au réseau ; et
un processeur (605) configuré pour segmenter le rapport de positionnement en fonction de l'ensemble de critères de segmentation,
dans lequel l'émetteur-récepteur (625) est configuré pour transmettre le rapport de positionnement segmenté au réseau en utilisant une connexion de liaison montante à petites transmissions de données, SDT, dans un état de faible puissance.

2. Appareil (600) selon la revendication 1, dans lequel l'état de faible puissance comprend l'un d'un état RRC_INACTIVE d'un état RRC_IDLE.

3. Appareil (600) selon la revendication 1, dans lequel l'ensemble de critères de segmentation pour le rapport de positionnement comprend un type de procédé de positionnement utilisé pour générer le rapport de positionnement, le type de procédé de positionnement comprenant un ou plusieurs parmi un procédé dépendant d'une RAT et un procédé indépendant d'une RAT.

4. Appareil (600) selon la revendication 1, dans lequel l'ensemble de critères de segmentation pour le rapport de positionnement comprend une priorité des mesures de positionnement demandées associées à un procédé de positionnement.

5. Appareil (600) selon la revendication 1, dans lequel l'ensemble de critères de segmentation pour le rapport de positionnement comprend une qualité de service de positionnement, QoS, d'une ou plusieurs mesures de positionnement.

6. Appareil (600) selon la revendication 1, dans lequel des segments du rapport de positionnement qui sont transmis sont auto-décodables et autonomes.

7. Appareil (600) selon la revendication 1 configuré pour transmettre une première partie des segments de rapport de positionnement dans un état RRC_INACTIVE et une seconde partie des segments de rapport de positionnement dans un état RRC_CONNECTED selon une indication reçue en provenance du réseau.

8. Appareil (600) selon la revendication 1, dans lequel le processeur (605) est configuré pour configurer et segmenter de manière autonome le rapport de positionnement pour de petites transmissions de données dans l'état RRC_INACTIVE.

9. Appareil (600) selon la revendication 1, dans lequel l'émetteur-récepteur (625) est configuré pour recevoir une indication afin d'effectuer une segmentation de rapport en provenane du réseau dans un état RRC_CONNECTED avant une transition vers un état RRC_lNACTIVE.

10. Appareil (600) selon la revendication 1, dans lequel l'émetteur-récepteur (625) est configuré pour transmettre le rapport de positionnement segmenté en utilisant soit une SDT d'autorisation configurée, soit une SDT de canal à accès aléatoire.

11. Appareil (600) selon la revendication 1, dans lequel le processeur (605) est configuré pour détecter un déclencheur de transmission du rapport de positionnement segmenté à l'aide de la SDT, le déclencheur comprenant un segment du rapport de positionnement satisfaisant un seuil de volume de données.

12. Appareil (600) selon la revendication 1, dans lequel l'émetteur-récepteur (625) est configuré pour transmettre, au réseau, des informations de capacité pour effectuer des mesures de positionnement correspondant à une technique de positionnement dans l'état de faible puissance.

13. Procédé de dispositif (600) d'équipement d'utilisateur, UE, le procédé comprenant :
la réception, en provenance d'un serveur de localisation d'un réseau, d'une configuration de segmentation de rapport de positionnement comprenant un ensemble de critères de segmentation pour segmenter un rapport de positionnement pour une transmission au réseau (805) ;
la segmentation de rapport de positionnement en fonction de l'ensemble des critères de segmentation (810) ; et
la transmission de rapport de positionnement segmenté au réseau en utilisant une connexion de liaison montante à petites transmissions de données, SDT, dans un état de faible puissance (815).

14. Appareil à fonction de réseau (700), l'appareil comprenant :
un émetteur-récepteur (725) configuré pour recevoir, en provenance d'un dispositif (600) d'équipement utilisateur, UE, des informations de capacité pour effectuer des mesures de positionnement correspondant à une technique de positionnement dans un état de faible puissance ; et
un processeur (705) configuré pour déterminer une configuration de segmentation de rapport de positionnement comprenant un ensemble de critères de segmentation pour segmenter un rapport de positionnement sur la base des informations de capacité,
dans lequel l'émetteur-récepteur (725) est configuré pour :
transmettre, au dispositif (600) UE, la configuration de segmentation de rapport de positionnement ; et
recevoir, en provenance du dispositif (600) UE, le rapport de positionnement segmenté en utilisant une connexion de petites transmissions de données, SDT, au dispositif (600) UE.

15. Appareil (700) selon la revendication 14, dans lequel l'émetteur-récepteur (725) est configuré pour recevoir, en provenance d'une station de base d'un réseau (121), une configuration de réception discontinue, DRX, indiquant un état de puissance du dispositif (600) UE.
